# EUROPÄISCHE PATENTSCHRIFT

(11) **EP 1 464 681 B1**
(45) Veröffentlichungstag und Bekanntmachung des Hinweises auf die Patenterteilung: **28.08.2013**
(21) Anmeldenummer: 04002390.5
(22) Anmeldetag: 04.02.2004
(51) Int. Cl.: C09C 1/58

(54) **Russperlen**
Carbon black beads
Billes de charbon

(30) Priorität: 07.03.2003 DE 10309957
(43) Veröffentlichungstag der Anmeldung: 06.10.2004
(73) Patentinhaber: Evonik Carbon Black GmbH, 63457 Hanau (DE)
(72) Erfinder: Schuch, Andreas, Dr., 50321 Brühl (DE); Bidet, Didier, 51379 Leverkusen (DE)
(74) Vertreter: polypatent

(56) Entgegenhaltungen:
- EP-A1- 0 598 318
- EP-A1- 1 293 543
- GB-A- 1 353 258
- US-A- 4 238 199

## Beschreibung

Die Erfindung betrifft Rußperlen, ein Verfahren zu deren Herstellung sowie deren Verwendung.

Bei der Verarbeitung von Rußen werden vorzugsweise granulierte Produkte eingesetzt, die häufig als Rußgranulat, Perlruß oder pelletierter Ruß bezeichnet werden. Abhängig von der Struktur und der Oberfläche der Ruße ist die Granulation unterschiedlich zu handhaben. So agglomerieren Ruße mit niedriger Struktur und niedriger Oberfläche leichter als Ruße mit hoher Struktur und niedriger Oberfläche.

Zur Granulation der Ruße werden bekannterweise großtechnisch zwei unterschiedliche Verfahren verwendet: die Naßgranulation in einer Perlmaschine mit anschließender Trocknung und die Trockengranulation in einer Perltrommel. Beide Verfahren haben deutlich unterschiedliche Prozeßparameter, die in engem Zusammenhang mit den physikalischen Vorgängen bei der jeweiligen Agglomeration und mit den resultierenden Perleigenschaften stehen.

Für die Naßgranulation können als Perlmaschinen Granulatoren mit Stachelwelle eingesetzt werden. Sie bestehen aus einem liegend angeordneten feststehenden Rohr (Stator) mit einer darin sich drehenden Stachelwelle. Zwischen der Achse der Stachelwelle und der Rohrwandung befindet sich der für die Granulation zur Verfügung stehende Perlraum. Im Perlraum wird der Ruß vom Einlauf am einen Ende des Rohres zum Auslauf am anderen Ende des Rohres durch die sich drehende Stachelwelle befördert. Dabei erfolgt die Agglomeration durch Abrollen des Rußes an der stehenden Rohrwandung.
In der Perlmaschine wird der pulverförmige Ruß mit Wasser, gegebenenfalls unter Zusatz eines Bindemittels, intensiv gemischt. Die feuchten Perlen werden anschließend in einem weiteren Verfahrensschritt getrocknet (DE-AS 1 264 412, US 3,607,086, US 3,787,161, US 4,222,727).

Die erzielbare Perlhärte der durch die bekannte Naßgranulation erhaltenen Rußperlen liegt ohne Einsatz von Bindemitteln im Bereich zwischen 0,1 bis 0,3 N bei Perldurchmessern zwischen 1,4 und 1,7 mm.

Sowohl bei der Naß- als auch bei der Trockengranulation können Additive zur Erhöhung der Perlhärte und/oder zum Verbessern der Dispergierbarkeit eingesetzt werden.

Die bekannten Rußperlen haben die Nachteile, dass die Perlhärte, Perlform und/oder Perlaufbau so ungenügend sind, dass die Verarbeitbarkeit (Dispergierbarkeit und Inkorporationsgeschwindigkeit) und/oder die Fließ- und Lagereigenschaften schlecht sind.

Die Perlhärte eines geperlten Rußes sollte möglichst gering sein, damit die Perle schnell zerfällt und eine schnelle und gute Dispergierung erreicht wird. Jedoch werden bei abnehmender Perlhärte die Fließ- und Lagereigenschaften verschlechtert. Durch die niedrigere Perlhärte werden bei Fließ- beziehungsweise Fördervorgängen mehr Feinanteil durch Abrieb und Bruch gebildet, was Förderprobleme und schlechtere beziehungsweise langsamere Einarbeitung (Dispergierung und Inkorporation) von Rußperlen in das verwendete Medium zur Folge hat.

EP-A-1 293 543, ein Dokument des Stands der Technik nach Art. 54(3) EPÜ, offenbart perlförmige Pigmentrußpräparationen, die mindestens einen Ruß und mindestens ein Netzmittel enthalten, bei denen die Gesamtperlhärte größer 35 kg, die Einzelperlhärte der 1,4 - 1,7 mm Perlfraktion größer 100 g, der Anteil der Perlen mit Durchmesser ≥ 1 mm größer 50% und der Wassergehalt größer 2 % ist.

US-Patent 4,238,199 offenbart ein Verfahren zur Herstellung von Rußperlen, umfassend Mischen des Rußes mit Wasser und Formen der Mischung in Perlen mit einer Nasspelletierungsmaschine, wobei die Umdrehungsgeschwindigkeit der Welle der Pelletierungsmaschine und die Menge und der Ort des eingedüsten Wassers kontrolliert wird und danach der feuchte Ruß getrocknet wird.

GB 1 353 258 betrifft ein Verfahren zur Herstellung von nasspelletiertem Ruß, das den Transport einer Mischung von Ruß und einer Pelletierungsflüssigkeit in aufwärts gerichteter Richtung durch eine Pelletierungsvorrichtung, die im wesentlichen senkrecht angeordnete Stachelwellen aufweist, umfasst.

Aufgabe der vorliegenden Erfindung ist es, Rußperlen zur Verfügung zu stellen, die gute Fließ- und Lagereigenschaften besitzen und weich genug sind gut zu inkorporieren und zu dispergieren.

Gegenstand der Erfindung ist ein Verfahren zur Herstellung von Rußperlen, welches dadurch gekennzeichnet ist, dass man in einem Ringschichtmischgranulator die Einspeisemenge an unverperlten Ruß konstant hält und über zwei möglichst einlaufsnah positionierte Düsenhalter mit jeweils zwei Düsen, wobei die Sprühkegel der Düsen einen Winkel in der Strömungsrichtung des Rußes zwischen 10 und 90°, vorzugsweise zwischen 30 und 60°, zu dieser einnehmen, das Wasser bei einem Druck, gemessen an den Düsen, von 3 bis 5 bar eindüst.

Der unverperlte Ruß kann dem Einlauf des Ringschichtmischgranulator mit Hilfe einer Förderschnecke zugeführt werden. Der Rußdurchsatz beziehungsweise Mengendurchsatz des Ringschichtmischgranulator ist daher gleich der Förderrate der Förderschnecke und kann somit in weiten Grenzen eingestellt werden. Füllmenge und Verweilzeit können durch Anheben des Auslaufs gegenüber dem Einlauf verlängert werden. Der sich dabei ergebende Winkel zwischen der Achse des Granulators und der Horizontalen kann zwischen 0 und 15° verändert werden.

Füllmenge und Verweilzeit können weiterhin durch die Drehzahl der Stachelwelle beeinflußt werden. Bei gleichbleibender Rußzufuhr (konstanter Rußdurchsatz) verringern sich mit steigender Drehzahl die Füllmenge und Verweilzeit proportional zueinander.

Während der Verperlung kann der Stator des Ringschichtmischgranulators auf eine Temperatur zwischen 20 und 150°C, bevorzugt auf 80 bis 120°C, erwärmt werden, um ein Verkleben des Rußes mit der Wandung des Stators weitgehend zu unterbinden.

Die Rußperlen aus dem Ringschichtmischgranulator können anschließend getrocknet werden. Die Trocknertemperatur kann zwischen 100° und 250°C, vorzugsweise zwischen 150° und 200°C, betragen. Die Temperatur der Rußperlen beim Trockneraustritt kann zwischen 30° und 100°C, vorzugsweise zwischen 40° und 70°C, betragen.

Mit dem erfindungsgemäßen Verfahren können prinzipiell alle Rußtypen granuliert werden. Es können Furnaceruße, Flammruße, Gasruße, Channelruß, Thermalruß, Acetylenruß, Plasmaruß, Inversionsruß, bekannt aus DE 195 21 565, Sihaltige Ruße, bekannt aus WO 98/45361 oder DE 19613796, oder metallhaltige Ruße, bekannt aus WO 98/42778, Lichtbogenruße und kohlenstoffhaltige Materialien, die Nebenprodukte chemischer Produktionsprozesse sind, verwendet werden. Vorzugsweise können Ruße mit BET-Oberflächen zwischen 10 und 200 m²/g verwendet werden.

Dem eingedüsten Wasser können Bindemittel zugesetzt werden. Als Bindemittel können Melasse, Ligninsulfonate sowie zahlreiche andere Stoffe alleine oder in Kombination miteinander zugesetzt werden. Das Bindemittel kann in einer Konzentrationen zwischen 0,5 und 5 Gew.-% eingesetzt werden. Für Rußperlen mit einer Ölabsorptionszahl größer als 100 ml/100 g kann das Bindemittel in einer Konzentration zwischen 0,5 und 1,5 Gew.-% eingesetzt werden. Für Rußperlen mit einer Ölabsorptionszahl kleiner als 90 ml/100 g kann das Bindemittel in einer Konzentration zwischen 1,5 und 2,5 Gew.-% eingesetzt werden.

Abhängig von der Ölabsorptionszahl und der Ölabsorptionszahl des gepreßten Rußes ergeben sich zwei erfindungsgemäße Gruppen von Rußperlen:
1. Gegenstand der Erfindung sind Rußperlen mit einer Ölabsorptionszahl größer als 100 ml/100 g und einer Ölabsorptionszahl von gepreßtem Ruß größer als 78 ml/100 g, welche dadurch gekennzeichnet sind, dass die Perlfraktion mit einem Durchmesser größer als 2,5 mm kleiner als 3,5 Gew.-%, vorzugsweise kleiner 2,0 Gew.-%, die Perlfraktion mit einem Durchmesser von 0,71 - 1,0 mm größer als 22 Gew.-%, vorzugsweise größer 25 Gew.-%, und die Einzelperlhärte der Fraktion mit dem Durchmesser 0,71 - 1,0 mm zwischen 7,0 und 25,0 g, vorzugsweise zwischen 8,0 und 20,0 g, ist.
2. Ein weiterer Gegenstand der Erfindung sind Rußperlen mit einer Ölabsorptionszahl kleiner als 90 ml/100 g und einer Ölabsorptionszahl von gepreßtem Ruß kleiner als 78 ml/100 g, welche dadurch gekennzeichnet sind, dass die Perlfraktion mit einem Durchmesser von 0,71 - 1,0 mm kleiner als 30 Gew.-%, vorzugsweise kleiner 25 Gew.-%, und die Einzelperlhärte der Fraktion mit dem Durchmesser 0,71 - 1,0 mm zwischen 7,0 und 25,0 g, vorzugsweise zwischen 8,0 und 20,0 g, ist.

Die Rußperlen können eine BET-Oberfläche von kleiner als 70m²/g, vorzugsweise kleiner als 50m²/g, haben. Der Feuchtigkeitsgehalt der noch ungetrockenten Rußperlen kann zwischen 35 - 60 Gew.-% betragen.

Die erfindungsgemäßen Rußperlen können in Polymermischungen, wie beispielsweise Kautschuk und Kunststoffe, Lacken, Farben, Pigmenten und den zahlreichen weiteren Verwendungsformen von Ruß verwendet werden.

Ein weiterer Gegenstand der Erfindung sind Kautschukmischungen, welche dadurch gekennzeichnet sind, dass sie Kautschuk, die erfindungsgemäßen Rußperlen, gegebenenfalls gefällte Kieselsäure, und/oder weitere Kautschukhilfsmittel enthalten.

Für die Herstellung erfindungsgemäßer Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u.a.
Polybutadien (BR)
Polyisopren (IR)
Styrol/Butadien-Copolymerisate mit Styrolgehalten von 1 bis 60, vorzugsweise 5 bis 50 Gew.-% (SBR)
Isobutylen/Isopren-Copolymerisate (IIR)
Butadien/Acrylnitril-Copolymere mit Acrylnitrilgehalten von 5 bis 60, vorzugsweise 10 bis 50 Gew. -% (NBR)
Ethylen/Propylen/Dien-Copolymerisate (EPDM)
sowie Mischungen dieser Kautschuke.

Die erfindungsgemäßen Kautschukmischungen können weitere Kautschukhilfsprodukte enthalten wie unter anderem Reaktionsbeschleuniger, -verzögerer, Alterungsschutzmittel, Stabilisatoren, Verarbeitungshilfsmittel, Weichmacher, Wachse, Metalloxide sowie Aktivatoren, wie Triethanolamin, Polyethylenglykol oder Hexantriol, die der Kautschukindustrie bekannt sind.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-% bezogen auf Kautschuk.

Als Vernetzer können Schwefel, organische Schwefelspender oder Radikalbildner dienen. Die erfindungsgemäßen Kautschukmischungen können darüber hinaus Vulkanisationsbeschleuniger enthalten.

Beispiele für geeignete Vulkanisationsbeschleuniger sind Mercaptobenzthiazole, Sulfenamide, Guanidine, Thiurame, Dithiocarbamate, Thioharnstoffe und Thiocarbonate.

Die Vulkanisationsbeschleuniger und Vernetzer können in Mengen von 0,1 bis 10 Gew.-%, bevorzugt 0,1 bis 5 Gew.-%, bezogen auf Kautschuk, eingesetzt werden.

Die Abmischung der Kautschuke mit den erfindungsgemässen Rußperlen, gegebenenfalls Kautschukhilfsmitteln und gegebenenfalls weiteren Füllstoffen kann in üblichen Mischaggregaten, wie Walzen, Innenmischern und Mischextrudern, durchgeführt werden. Üblicherweise werden solche Kautschukmischungen in Innenmischern hergestellt, wobei zunächst in einer oder mehreren aufeinanderfolgenden thermomechanischen Mischstufen die Kautschuke, die erfindungsgemäßen Rußperlen, gegebenenfalls die Kieselsäure und die Kautschukhilfsmittel bei 100 bis 170°C eingemischt werden. Dabei kann sich die Zugabereihenfolge und der Zugabezeitpunkt der Einzelkomponenten entscheidend auf die erhaltenen Mischungseigenschaften auswirken. Die so erhaltene Kautschukmischung wird dann üblicherweise in einem Innenmischer oder auf einer Walze bei 40-110°C mit den Vernetzungschemikalien versetzt und zur sogenannten Rohmischung für die nachfolgenden Prozeßschritte, wie zum Beispiel Formgebung und Vulkanisation, verarbeitet.

Die Vulkanisation der erfindungsgemäßen Kautschukmischungen kann bei Temperaturen von 80 bis 220°C, bevorzugt 130 bis 180°C, gegebenenfalls unter Druck von 10 bis 200 bar erfolgen.

Die erfindungsgemäßen Kautschukmischungen eignen sich unter anderem zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsolen, Dichtungsringen, Profilen und Dämpfungselementen.

Die erfindungsgemäßen Rußperlen haben den Vorteil, dass trotz geringer Einzelperlhärte ein ausgezeichnetes Fließund Lagerverhalten ermöglicht wird.

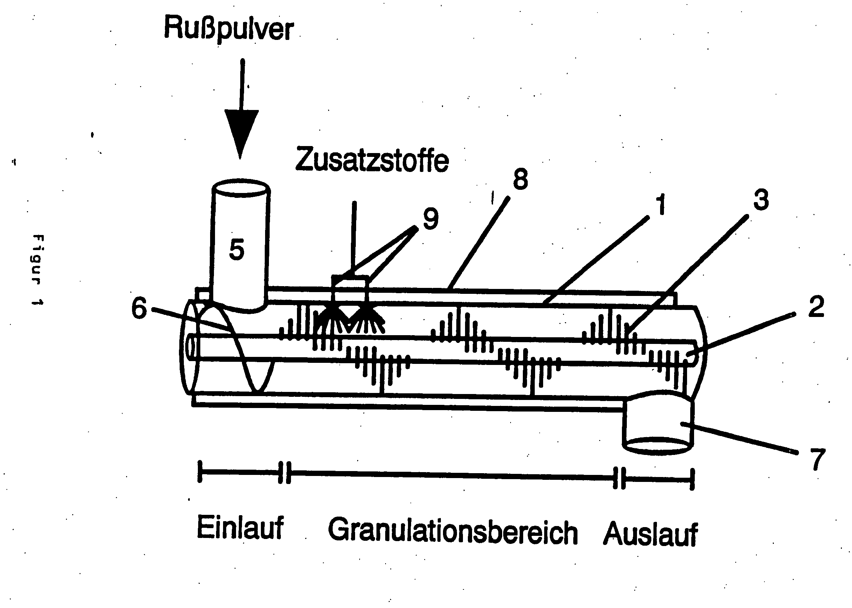

- Figur 1:: Ringschichtmischgranulator mit Stachelwelle zur Durchführung des erfindungsgemäßen Verfahrens.

Das erfindungsgemäße Verfahren wird mit einem Ringschichtmischgranulator mit Stachelwelle durchgeführt. Der Aufbau eines solchen Ringschichtmischgranulator ist schematisch in Figur 1 dargestellt. Der Granulator besteht aus einem liegend angeordneten feststehenden Rohr 1, dem Stator, und einer darin axial angeordneten sich drehenden Stachelwelle 2 mit den wendelförmig angeordneten Stacheln 3. Zwischen der Stachelwelle 2 und dem Stator 1 befindet sich der Perlraum des Granulators. Der Ruß wird dem Ringschichtmischgranulator am Einlauf 5 zugeführt. Im Bereich des Einlaufs befindet sich auf der Stachelwelle eine Förderschnecke 6, die den ungeperlten Ruß in axialer Richtung zum Auslauf 7 fördert. Der Stator 1 ist doppelwandig ausgeführt und erlaubt die Temperierung der Statorwandung mit Hilfe einer Flüssigkeit 8. Längs des Stators befinden sich Durchgangsbohrungen, durch die Sprühdüsen 9 für Zusatzstoffe eingeführt werden können.

### Beispiel 1:

### Herstellung der Rußperlen

Die Vergleichsruße werden in einem Verperlungsaggregat mit einer Stachelwelle, wobei die Stacheln in drei Helixes um die Stachelwelle angeordnet sind, hergestellt. Die Umdrehungsgeschwindigkeit wird konstant auf 220 UpM reguliert. Die Wassereinspeisung erfolgt durch eine axiale Lanze mit sechs Löchern.

Mit dem Ringschichtmischgranulator nach Figur 1 werden verschiedene erfindungsgemäße Rußtypen granuliert. Der für alle folgenden erfindungsgemäßen Beispiele verwendete Granulator (RMG 600WL der Firma Ruberg Mischtechnik KG) hat eine Länge von 3000 mm und einen Innendurchmesser von 515 mm. Der Granulator wird mit überhitztem Wasser von 110°C temperiert.

Die erfindungsgemäßen Ruße werden mit den in Tabelle 1 angegebenen Prozeßparameter hergestellt.

**Tabelle 1**

| Parameter | Erfindungsgemäße Rußperlen 2 | Erfindungsgemäße Rußperlen 3 | Erfindungsgemäße Rußperlen 4 |
|---|---|---|---|
| Sprühwinkel | 45° | 45° | 45° |
| Wasserdruck an den Sprühdüsen | 3,5 bar | 3,5 bar | 3,5 bar |
| Feuchtigkeitsgehalt der resultierenden Rußperlen | 53 Gew.% | 53 Gew.% | 37 Gew.% |
| Melassekonzentration im Vorratstank | 20 Gew.% | 20 Gew.% | 20 Gew.% |
| Melassekonzentration im Verperlungswasser | 1,5 Gew.% | 1 Gew.% | 2 Gew.% |
| Trocknertemperatur | 175°C | 175°C | 180°C |

Zur Herstellung der erfingungsgemäßen Rußperlen werden die Einspritzdüsen des Perlwassers möglichst nahe dem Rußeinlauf in den RMG 600 WL positioniert, um eine optimale Granulationswirkung über die verbleibende Länge des RMG 600 WL zu erhalten. Es werden zwei Düsenhalter mit je zwei Sprühdüsen verwendet. Die Sprührichtung der Düsen hat einen Winkel von 45° zur und in die Richtung der Strömungsrichtung des Rußes. Der Wasserdruck an den Sprühdüsen beträgt konstant 3,5 bar, resultierend in einem Feuchtigkeitsgehalt der ungetrockneten Rußperlen von 35 - 60 Gew.-%. Als Bindemittel wird 20%ige wäßrige Melasse der Firma France Melasses S.A., Paris eingesetzt, die aus einem Vorratstank auf Konzentrationen von 1 bis 4 Gew.-% verdünnt wird. Der Zulauftank, aus dem die Einspeisung des unverperlten Rußes erfolgt, muss dabei konstant gefüllt sein, um eine mengenkonstante Einspeisung in den RMG 600 zu erreichen. Die Rußperlen werden anschließend getrocknet.

Die analytischen Eigenschaften der getrockneten Rußperlen sind in Tabelle 2 und Tabelle 3 aufgeführt.

**Tabelle 2 Analytische Daten**

| | BET-Oberfläche | Ölabsorptionszahl | Ölabsorptionszahl von gepreßtem Ruß | Einzelperlhärte | Einzelperlhärte |
|---|---|---|---|---|---|
| | [m²/g] | [ml/100g] | [ml/100g] | (0,71-1mm) [g] | (1,4-1,7mm) [g] |
| Vergleichsrußperlen 1 | 41 | 121 | 88 | 13,6 | 30 |
| Erfindungsgemäße Rußperlen 2 | 42 | 121 | 88 | 10,3 | 22 |
| Erfindungsgemäße Rußperlen 3 | 41 | 123 | 89 | 7,8 | 16 |
| Erfindungsgemäße Rußperlen 4 | 32 | 65 | 60 | 14,0 | 25 |
| Vergleichsrußperlen 5 | 31 | 65 | 59 | 13,8 | 35 |

**Tabelle 3: Perlgrößenverteilung**

| | Vergleichsrußperlen 1 | Erfindungsgemäße Rußperlen 2 | Erfindungsgemäße Rußperlen 3 | Erfindungsgemäße Rußperlen 4 | Vergleichsrußperlen 5 |
|---|---|---|---|---|---|
| Perlfraktion | [Gew.-%] | [Gew.-%] | [Gew.-%] | [Gew.-%] | [Gew.-%] |
| <0,125 mm | 2,9 | 0,5 | 0,3 | 3,7 | 1,4 |
| 0,125 - 0,25 mm | 2,9 | 0,8 | 0,6 | 9 | 6,2 |
| 0,25 - 0,50 mm | 6,4 | 4,8 | 6,1 | 23,7 | 22,4 |
| 0,50 - 0,71 mm | 8 | 10 | 13,7 | 21,9 | 22,5 |
| 0,71 - 1,0 mm | 19 | 27,6 | 34,9 | 24,2 | 30,8 |
| 1,0 - 1,5 mm | 37,1 | 44,2 | 39,1 | 14,7 | 14,8 |
| 1,5 - 2,0 mm | 12,5 | 8,9 | 3,9 | 1,6 | 0,8 |
| 2,0 - 2,5 mm | 7,7 | 2,8 | 1,2 | 0,6 | 0,4 |
| > 2,5 mm | 3,5 | 0,4 | 0,2 | 0,6 | 0,7 |

Die analytischen Daten der Rußperlen werden nach folgenden Normen bestimmt:

| | |
|---|---|
| BET-Oberfläche | ASTM 6556-01a, |
| Ölabsorptionzahl: | ASTM D-2414-01, |
| Ölabsorptionzahl von gepreßtem Ruß | ASTM D-3493-01 |
| Einzelperlhärte: | ASTM D-3313-99, |
| Feinanteil: | ASTM D-1508-01 |

Die Perlgrößenverteilung wird in Anlehnung an ASTM D 1511-00 bestimmt. Als Siebschüttler wird ein Ro-Tap in Lizenz der Firma WS Tyler eingesetzt. In Abweichung zu der genannten Norm wird eine Siebkaskade mit den Sieben 0,125 mm; 0,25 mm, 0,5 mm, 0,71 mm, 1,00 mm, 1,5 mm, 2,0 mm und 2,5 mm verwendet. Die Zahlenangaben bezeichnen dabei die lichten Maschenweiten der Siebe.

Zur Bestimmung der Ölabsorptionzahl und der Ölabsorptionzahl von gepreßtem Ruß wird das Parafinöl der Fa. Exxon, Marcol 82, eingesetzt.

### Beispiel 2

### Fördereigenschaften:

Die Fördereigenschaften von Rußperlen werden in einer Technikumsanlage geprüft. Die Rohre sind mit einem Gummischlauch ausgekleidet, um das Anhaften von Fördergut an die Rohrwände zu minimieren. Die Rußperlen werden in einem Kreis gefahren mit einer gesamten Förderstrecke von 64 m einschließlich 12 m Vertikalförderung und sieben Umlenkungen. Der Rohrdurchmesser beträgt 100 mm über den Großteil der Förderstrecke und 110 mm auf den letzten 14 m. Mittels einer Zellradschleuse werden die Rußperlen aus dem Vorratsgefäß in das Fördersystem eingespeist. Am Ende des Fördersystems befindet sich ein Aufnahmetank für den geförderten Ruß.

Es werden die Rußperlen aus Tabelle 2 und 3 untersucht.

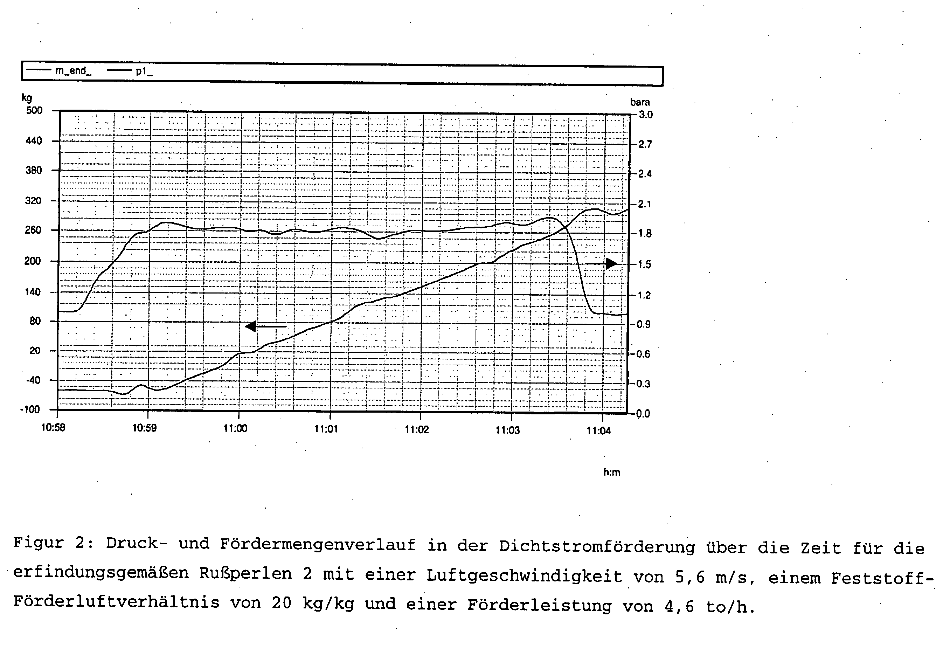

Die Ergebnisse des Dichtstromförderversuches zeigen, dass bei den erfindungsgemäßen Rußperlen 2 der Druckverlauf über die Zeit konstant ist beziehungsweise eine Plateau ergibt (Figur 2). Die Luftgeschwindigkeit kann bis auf 5,6 m/s abgesenkt werden, ohne dass es zu Schwankungen im Druckverlauf kommt. Es wird ein hohes Feststoff-Förderluftverhältnis von 20 kg/kg und eine Förderleistung von 4,6 to/h erreicht.

Die linke Achse der Figuren 2-10 beschreibt das Gewicht des in den Aufnahmetank geförderten Rußes (Einheit Kg). Die rechte Achse beschreibt den Förderdruck (Einheit bara für den absoluten Druck). Das heißt zum Beispiel, dass bei 1,5 bara der Überdruck in der Leitung 0,5 bar beträgt.

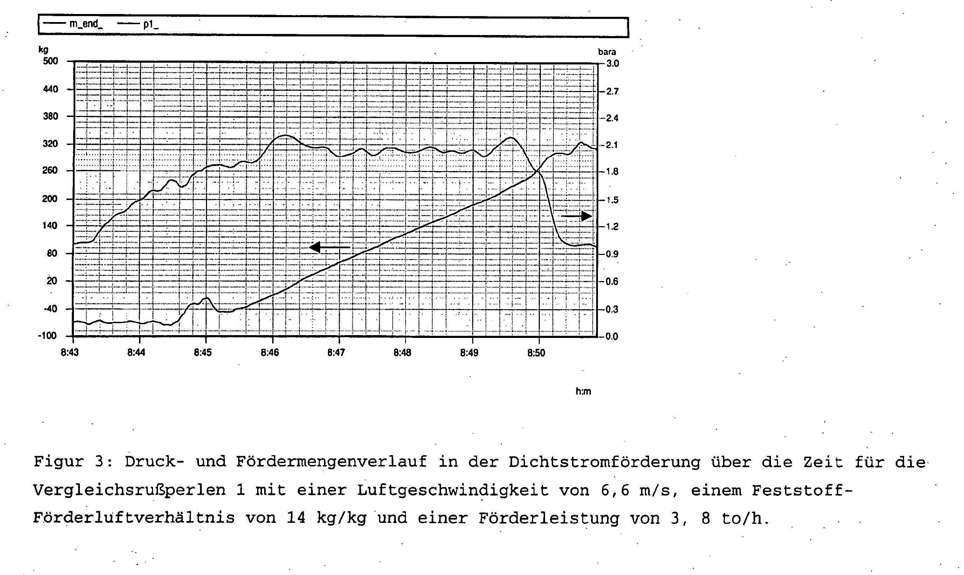

Obwohl bei den Vergleichsrußperlen 1 das Feststoff- / Luft-Verhältnis auf 14 kg/kg abgesenkt wird, ist ein deutlich unruhiger Druckverlauf über die Zeit zu erkennen (Figur 3), sodass die Luftgeschwindigkeit von 6,6 m/s nicht weiter abgesenkt werden kann, ohne dass die Gefahr von Förderproblemen auftritt. Es kann zu ungleichmäßigem Fördern bis hin zum Verstopfen der Förderleitungen kommen. Die Fördermenge der Vergleichrußperlen 1 ist damit auf 3,8 to/h limitiert.

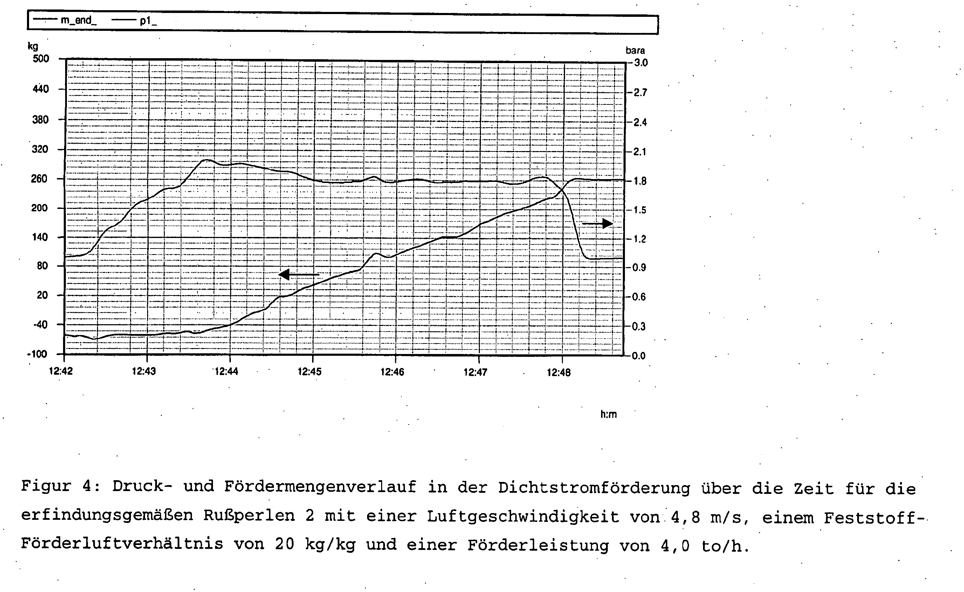

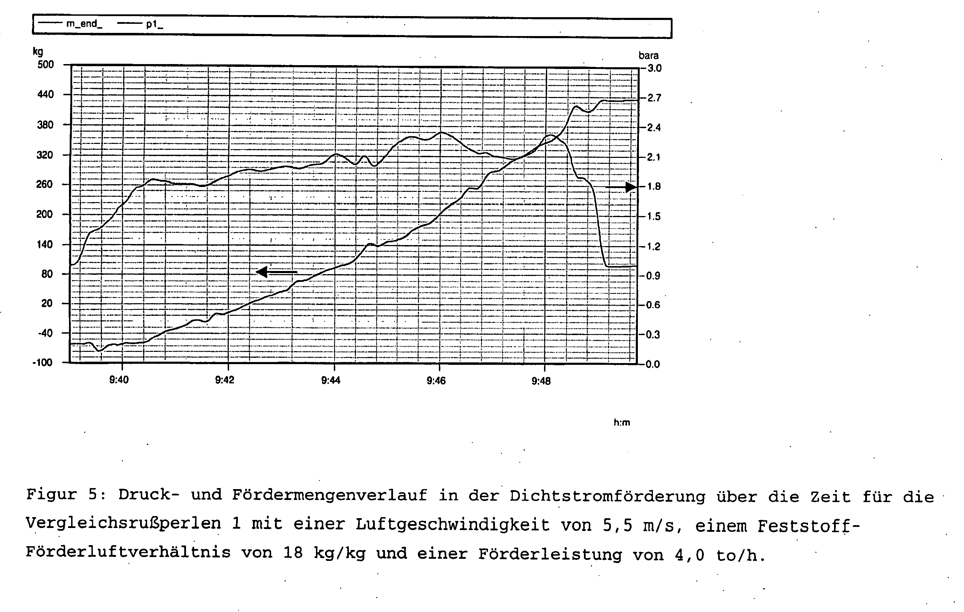

Bei der Dichtstromförderung zeigt ein Vergleich, dass die erfindungsgemäßen Rußperlen 2 (Figur 4), bei einer Luftgeschwindigkeit von 4,8 m/s sogar mit einem gegenüber den Vergleichsrußperlen 1 (Figur 5) erhöhten Feststoff- / Luft-Verhältnis ein Plateau des Druckes im Druck-Zeit-Diagramm bilden und damit stabile Förderbedingungen ergeben.

Die Vergleichsrußperlen 1 zeigen trotz des reduzierten Feststoff- / Luft-Verhältnisses bereits starke Schwankungen im Druckverlauf über der Zeit, verbunden mit einem steigenden Druck, was belegt, dass ein weiteres Absenken der Fördergeschwindigkeit für diese Rußperlen nicht möglich ist, ohne dass die Gefahr von Förderproblemen deutlich erhöht wird.

Mit den Vergleichsrußperlen 1 und den erfindungsgemäßen Rußperlen 2 werden unter den vorgenannten Bedingungen 4 to/h gefördert, aber es ist klar zu erkennen, dass die Fördermenge für die Vergleichsrußperlen 1 abgesenkt werden muss, um dauerhaft stabile Förderbedingungen zu erreichen.

Bei nahezu gleichen Förderluftgeschwindigkeiten (ca. 5,5 m/s; Figur 2 und 5) ist mit den erfindungsgemäßen Rußperlen 2 ein höheres Feststoff- / Luft-Verhältniss möglich als bei den Vergleichsrußperlen 1, die bereits bei dem Feststoff- / Luftverhältnis von 18kg/kg einen sehr unruhigen Verlauf des Druckes über der Zeit zeigen, sodass insgesamt eine höhere Förderleistung mit den erfindungsgemäßen Rußperlen 2 erzielt werden kann.

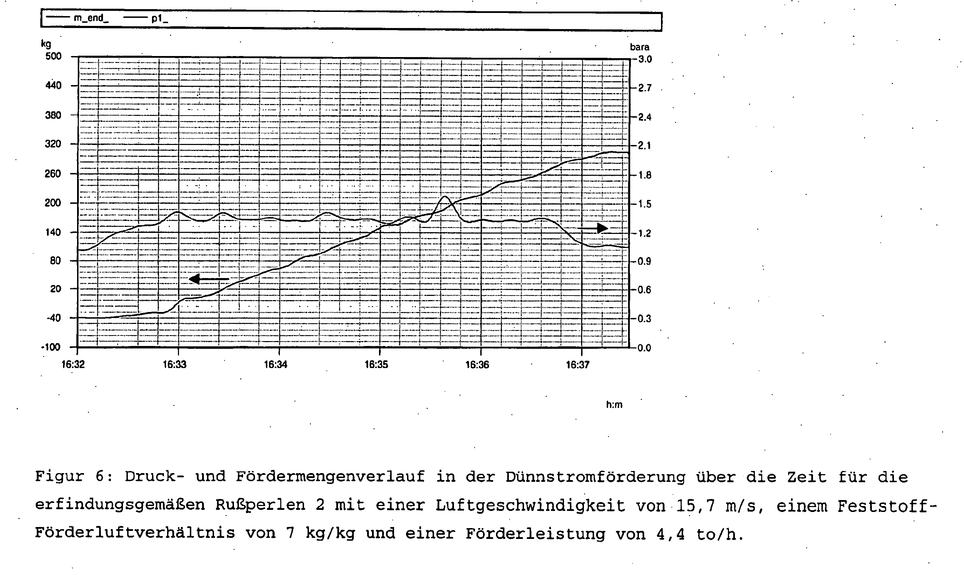

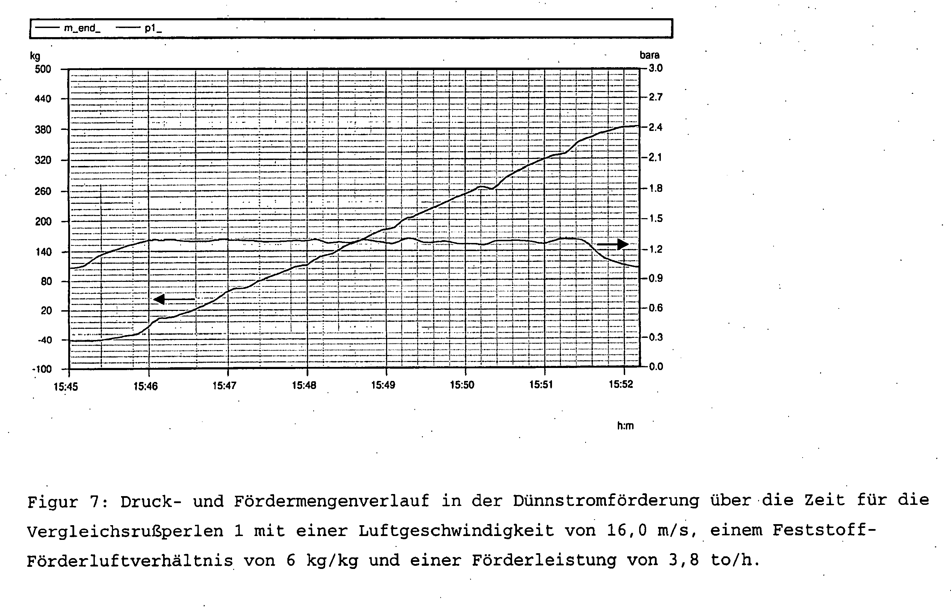

Bei der Dünnstromförderung ergibt sich, dass die Vergleichsrußperlen 1 und die erfindungsgemäßen Rußperlen 2 aufgrund der erhöhten Förderluftgeschwindigkeit stabil gefördert werden können (Figur 6 und 7). Die erfindungsgemäßen Rußperlen 2 können mit einem leicht erhöhten Feststoff- / Luft-Verhältniss gegenüber den Vergleichsrußperlen 1 gefahren werden, so dass insgesamt eine höhere Förderleistung erzielt werden kann. Bei den erfindungsgemäßen Rußperlen 2 hat sich nach der Förderung ein Feinanteil von 15 Gew.-% gebildet, was deutlich unter dem Feinanteil des Vergleichsrußes 1 von über 20 Gew.-%, liegt. Die erfindungsgemäßen Rußperlen 2 sind somit leichter zu dispergieren. Die gute Dispergierbarkeit wird durch die niedrige Einzelperlhärte der erfindungsgemäßen Rußperlen 2 noch verstärkt. Die Einzelperlhärte der Fraktion 1,4 - 1,7 mm beträgt für die erfindungsgemäßen Rußperlen nur 22 g, während die Vergleichsrußperlen 1 in dieser Fraktion eine Einzelperlhärte von 30 g aufweist.

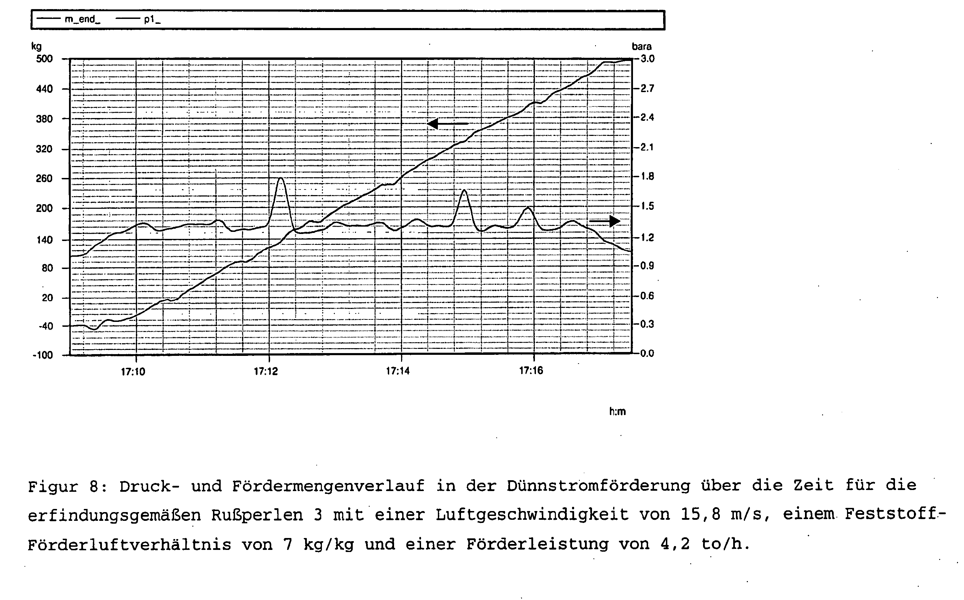

Die erfindungsgemäßen Rußperlen 2 (Figur 6) und 3 (Figur 8), die ein sehr ähnliches Perlspektrum aber unterschiedliche Einzelperlhärten aufweisen, werden in der Dünnstromförderung verglichen. Es zeigt sich, dass die erfindungsgemäßen Rußperlen 3 mit einer Einzelperlhärte von 16g (1,4 - 1,7 mm) nach der Förderung einen Feinanteil von 20 Gew.-% und die erfindungsgemäßen Rußperlen 2 bei einer Einzelperlhärte von 22 g (1,4 - 1,7 mm) einen Feinanteil von nur 15 Gew.-% unter diesen Förderbedingungen aufweisen.

Die erfindungsgemäßen Rußperlen 3 haben im Gegensatz zu den Vergleichsrußperlen 1 eine schmälere Perlverteilung bei sehr niedriger Einzelperlhärte, was vorteilhaft für die Dispergierung ist. Trotz der deutlich unterschiedlichen Einzelperlhärten zeigen die erfindungsgemäßen Rußperlen 3 (Figur 8) sogar bei erhöhtem Feststoff- /-Luft-Verhältnis und damit erhöhter Fördermenge nach Dünnstromförderung einen Feinanteil von 20 Gew.-%, während die Vergleichsrußperlen 1 (Figur 7) mit einem Feinanteil von 21 Gew.-% sogar noch über diesem Wert liegen bei einer gleichzeitig reduzierten Förderleistung.

Die erfindungsgemäßen Rußperlen 4 und die Vergleichsrußperlen 5 haben andere kolloidale Eigenschaften als die oben aufgeführten Ruße. Im Gegensatz zu den oben betrachteten Rußen haben sie eine geringere Oberfläche und eine geringere Struktur.

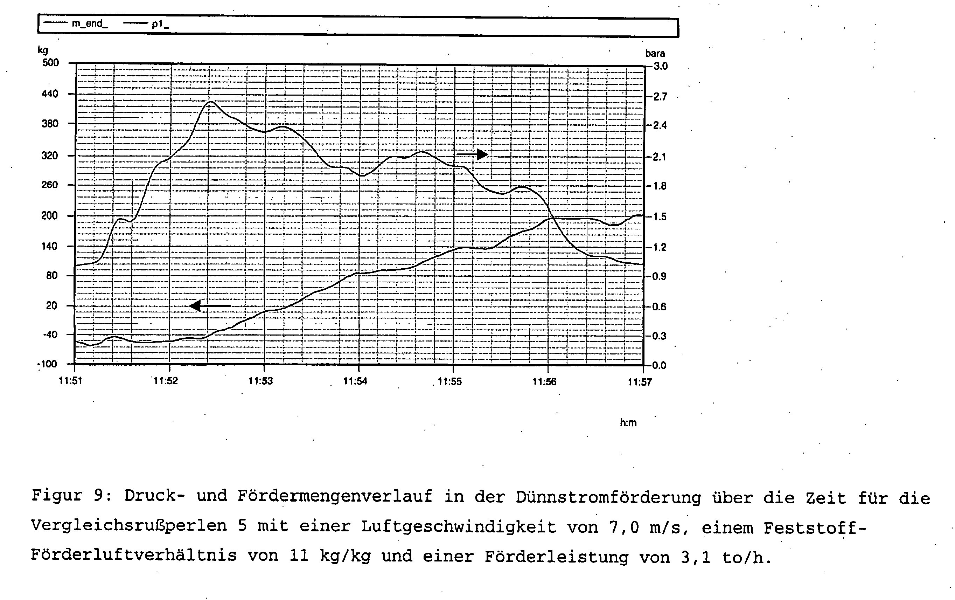

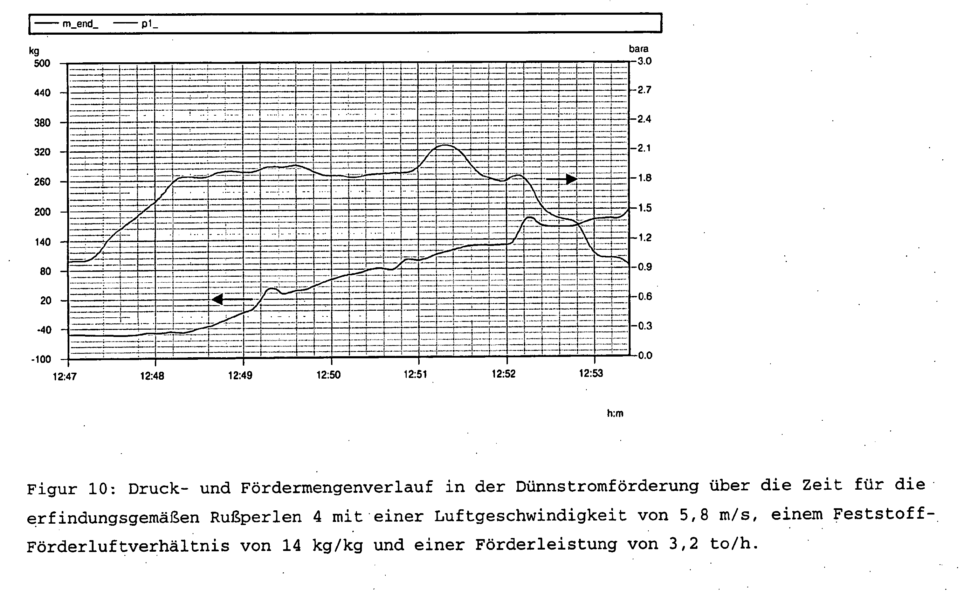

In Figur 9 und 10 sind die Ergebnisse der beiden Rußperlen bei verschiedenen Luftgeschwindigkeiten im Dünnstromverfahren dargestellt. Die erfindungsgemäßen Rußperlen 4 können bei einer Förderluftgeschwindigkeit von 5,8 m/s und einem Feststoff- / Luftverhältnis von 14 kg/kg gerade noch stabil gefördert werden, wie an dem plateauähnlichen Druckverlauf über die Zeit gesehen werden kann (Figur 10). Daraus resultiert eine Förderleistung von 3,2 to pro Stunde. Die Vergleichsrußperlen 5 können selbst bei der höheren Luftgeschwindigkeit von 7,0 m/s und einem auf 11 kg/kg reduzierten Feststoff- / Luftverhältnis nicht stabil gefördert werden, wie an dem instabilen Druckverlauf über die Zeit gesehen werden kann (Figur 9). Die daraus resultierende Förderleistung beträgt 3,1 to/h, kann aber in der Praxis wohl nicht erreicht werden, da Verstopfungen auftreten werden. Gleichzeitig haben die Vergleichsrußperlen 5 nach der Förderung eine Feinanteil von 15 Gew.-% und würden deshalb in weiteren Fördereinrichtungen und bei der Dispergierung in anderen Medien Probleme bereiten, während die erfindungsgemäßen Rußperlen 4 nur einen Feinanteil von 7 Gew.-% nach der Förderung aufweisen und deshalb bessere Dispersions- und Fördereigenschaften besitzen.

## Patentansprüche

1. Verfahren zur Herstellung von Rußperlen, **dadurch gekennzeichnet, dass** man in einem Ringschichtmischgranulator die Einspeisemenge an unverperlten Ruß konstant hält und über zwei möglichst einlaufsnah positionierte Düsenhalter mit jeweils zwei Düsen, wobei die Sprühkegel einen Winkel in der Strömungsrichtung des Rußes zwischen 10 und 90° zu dieser einnehmen, das Wasser bei einem Druck, gemessen an den Düsen, von 3 bis 5 bar eindüst.

2. Rußperlen mit einer Ölabsorptionszahl größer als 100 ml/100 g und Ölabsorptionszahl von gepreßtem Ruß größer als 78 ml/100 g, **dadurch gekennzeichnet, dass** die Perlfraktion mit einem Durchmesser größer als 2,5 mm kleiner als 3,5 Gew.-%, die Perlfraktion mit einem Durchmesser von 0,71 - 1,0 mm größer als 22 Gew.-% und die Einzelperlhärte der Fraktion mit dem Durchmesser 0,71 - 1,0 mm zwischen 7,0 und 25,0 g ist.

3. Rußperlen mit einer Ölabsorptionszahl kleiner als 90 ml/100 g und eine Ölabsorptionszahl von gepreßtem Ruß kleiner als 78 ml/100 g, **dadurch gekennzeichnet, dass** die Perlfraktion mit einem Durchmesser von 0,71 - 1,0 mm kleiner als 30 Gew.-% und die Einzelperlhärte der Fraktion mit dem Durchmesser 0,71 - 1,0 mm zwischen 7,0 und 25,0 g ist.

4. Verwendung der Rußperlen nach Anspruch 2 oder 3 in Polymermischungen, Lacken, Farben oder Pigmenten.

5. Kautschukmischungen, **dadurch gekennzeichnet, dass** sie Kautschuk, die Rußperlen gemäß Anspruch 2 oder 3, gegebenenfalls gefällte Kieselsäure, und/oder weitere Kautschukhilfsmittel enthalten.

## Claims

1. A method for producing carbon black pellets, **characterized in that** in a ring layer mixing granulator the feed amount of unpelletized carbon black is kept constant and the water is dispensed via two nozzle holders positioned as close as possible to the inlet, each with two nozzles, where the spray cones make an angle between 10 and 90° to the direction of flow of the carbon black, at a pressure of 3-5 bar measured at the nozzles.

2. Carbon black pellets with an oil absorption number greater than 100 mL/100 g and an oil absorption number of the pressed carbon black greater than 78 mL/100 g, **characterized in that** the pellet fraction with a diameter greater than 2.5 mm is less than 3.5 wt%, the pellet fraction with a diameter of 0.71-1.0 mm is greater than 22 wt%, and the individual pellet hardness of the fraction with the 0.71-1.0 mm diameter is between 7.0 and 25.0 g.

3. Carbon black pellets with an oil absorption number less than 90 mL/100 g, and an oil absorption number of the pressed carbon black less than 78 mL/100 g, **characterized in that** the pellet fraction with a diameter of 0.71-1.0 mm is less than 30 wt% and the individual pellet hardness of the fraction with the 0.71-1.0 mm diameter is between 7.0 and 25.0 g.

4. The use of the carbon black pellets as in Claims 2 or 3 in polymer mixtures, paints, dyes or pigments.

5. Rubber mixtures, **characterized in that** they contain rubber, the carbon black pellets as in Claim 2 or 3, optionally precipitated silica, and/or other rubber auxiliaries.

## Revendications

1. Procédé d'obtention de perles de noir de carbone,
**caractérisé en ce que**
l'on maintient constante la quantité de noir de carbone ne se présentant pas sous forme de perle fournie dans un granulateur mélangeur à couche annulaire et l'on injecte de l'eau par deux supports de buses positionnés aussi près que possible de l'entrée et équipés chacun de deux buses, les cônes de pulvérisation faisant un angle compris entre 10 et 90° dans la direction d'écoulement par rapport à celle-ci, sous une pression, mesurée au niveau des buses de 3 à 5 bars.

2. Perles de noir de carbone ayant un indice d'absorption d'huile supérieur à 100 ml/ 100 g et un indice d'absorption d'huile du noir de carbone comprimé supérieur à 78 ml/ 100 g,
**caractérisées en ce que**
le pourcentage de perles ayant un diamètre supérieur à 2,5 mm est inférieur à 3,5 % en poids, le pourcentage de perles ayant un diamètre de 0,71 à 1,0 mm est supérieur à 22 % en poids, et la dureté des perles de la fraction ayant le diamètre compris entre 0,71 et 1,0 mm est compris entre 7,0 et 25,0 g.

3. Perles de noir de carbone ayant un indice d'absorption d'huile inférieur à 90 ml/ 100 g et un indice d'absorption d'huile du noir de carbone comprimé inférieur à 78 ml/ 100 g,
**caractérisées en ce que**
le pourcentage de perles ayant un diamètre de 0,71 à 1 mm est inférieur à 30 % en poids et la dureté des perles de la fraction ayant un diamètre de 0,71 à 1 mm est comprise entre 7,0 et 25,0 g.

4. Utilisation de perles de noir de carbone conformes à la revendication 2 ou 3, dans des mélanges polymères, des vernis, des colorants et des pigments.

5. Mélanges de caoutchouc **caractérisés en ce qu'**ils renferment du caoutchouc, des perles de noir de carbone conformes à la revendication 2 ou 3, le cas échéant de l'acide silicique précipité et/ou d'autres adjuvants de caoutchouc.
